# EUROPÄISCHE PATENTSCHRIFT

(11) **EP 3 695 138 B1**
(45) Veröffentlichungstag und Bekanntmachung des Hinweises auf die Patenterteilung: **27.04.2022**
(21) Anmeldenummer: 18789033.0
(22) Anmeldetag: 11.10.2018
(51) Int. Cl.: F16F 9/32, B25J 19/00

(54) **VERFAHREN ZUR BESTIMMUNG DES ABPRALLENS EINES BAUTEILS AN EINEM ANSCHLAG EINER HANDHABUNGSEINHEIT UND HANDHABUNGSEINHEIT**
METHOD FOR DETERMINING THE RECOIL OF A COMPONENT AGAINST A STOP OF A MANIPULATION UNIT, AND MANIPULATION UNIT
PROCÉDÉ PERMETTANT DE DÉTERMINER LE REBONDISSEMENT D'UNE PIÈCE CONTRE UNE BUTÉE D'UNE UNITÉ DE MANIPULATION, ET UNITÉ DE MANIPULATION

(30) Priorität: 13.10.2017 DE 102017123930
(43) Veröffentlichungstag der Anmeldung: 19.08.2020
(73) Patentinhaber: Schunk GmbH & Co. KG Spann- und Greiftechnik, 74348 Lauffen an Neckar (DE)
(72) Erfinder: SCHULZ, Stefan, 74336 Brackenheim-Stockheim (DE); FELLHAUER, Bruno, 74336 Brackenheim (DE); WILDT, Reiner, 74363 Gueglingen (DE)
(74) Vertreter: DREISS Patentanwälte PartG mbB
(86) Internationale Anmeldenummer: PCT/EP2018/077747
(87) Internationale Veröffentlichungsnummer: WO 2019/072974

(56) Entgegenhaltungen:
- WO-A1-2007/115631
- WO-A1-2010/100284
- DE-A1- 3 527 924
- DE-A1- 19 915 260

## Beschreibung

Die Erfindung betrifft ein Verfahren zur Bestimmung des Abprallens eines verfahrbaren Bauteils an einem Anschlag einer Handhabungseinheit, wobei die Handhabungseinheit ein Dämpfungselement zur Dämpfung der Bewegung des Bauteils vor Erreichen des Anschlags und einen Endlagenschalter mit einem Sensor aufweist, wobei der Endlagenschalter ein Endlagensignal erzeugt, wenn vom Sensor das Bauteil am Anschlag detektiert wird. Die Erfindung betrifft auch eine solche Handhabungseinheit.

Als Handhabungseinheiten kommen dabei insbesondere Schwenkeinheiten, Lineareinheiten, Hubeinheiten, Greif- oder Spanneinheiten, oder dergleichen in Betracht. Diese Handhabungseinheiten haben gemeinsam, dass ein Bauteil entweder entlang einer geraden Linie oder um eine Drehachse bewegt wird, wobei die Bewegung des Bauteils vor Erreichen der Endlage mit einem Dämpfungselement abgedämpft wird. Optimalerweise erfolgt die Dämpfung dabei derart, dass das Bauteil nur mit einer geringen Geschwindigkeit bzw. Restenergie gegen den Anschlag trifft.

Bei den Handhabungseinheiten kann es sich insbesondere um Schwenkeinheiten mit einem Schwenkteller handeln. Auf dem Schwenkteil können beispielsweise Bauteilträger oder Spanneinheiten angeordnet sein. Die Schwenkeinheiten weisen regelmäßig einen Sensor zur Detektion des verfahrbaren Bauteils, das vom Schwenkteller oder von einem damit bewegungsgekoppelten Bauteil, insbesondere von einem Kolben eines pneumatischen Antriebs, gebildet sein kann. Das verfahrbare Bauteil weist vorzugsweise einen Magneten auf, der vom Sensor detektiert wird. Der Sensor kann dabei insbesondere als Magnetsensor ausgebildet sein. Allerdings sind auch andere Sensortypen denkbar, welche geeignet sind die Lage des bewegten Bauteils abzufragen.

Bei den Handhabungseinheiten kann es sich insbesondere auch um Lineareinheiten oder Hubeinheiten handeln, mit denen ein Schlitten entlang einer geraden Linie, insbesondere horizontal oder vertikal verfahren wird. Der Schlitten kann dabei insbesondere als Bauteilträger oder zur Anordnung von Greifeinheiten ausgebildet sein, mit denen dann handzuhabende Bauteile gegriffen werden. Das verfahrbare Bauteil, welches insbesondere einen Magneten aufweist, wird dann vom Schlitten oder von einem mit dem Schlitten bewegungsgekoppelten Bauteil gebildet.

Ferner ist denkbar, dass es sich bei den Handhabungseinheiten um Greif- oder Spanneinheiten handelt, wobei das bewegte Bauteil dann eine verfahrbare Backe oder ein damit bewegungsgekoppeltes Bauteil, wie beispielsweise ein Kolben ist. Zur Detektion der Position der Backe oder des Bauteils mit dem Sensor weist dieses dann vorzugsweise einen Magneten auf.

DE 199 15 260 A1 offenbart ein Verfahren zur Bestimmung eines Anschlagens eines verfahrbaren Bauteils an einem Anschlag einer Handhabungseinheit, wobei die Handhabungseinheit ein Dämpfungselement zur Dämpfung der Bewegung des Bauteils vor Erreichen des Anschlags und einen Endlagenschalter aufweist, wobei der Endlagenschalter ein Endlagensignal erzeugt, wenn vom Sensor das Bauteil am Anschlag detektiert wird.

Insbesondere dann, wenn mit dem verfahrbaren Bauteil verschiedene Lasten bewegt werden, wenn die Bewegungsbahnen nicht geradlinig sind, wenn die Lage der Handhabungseinheit räumlich verändert wird, oder dann, wenn die Handhabungseinheit größeren Belastungen ausgesetzt ist, kann nicht immer gewährleistet werden, dass das Dämpfungselement das Bauteil derart dämpft, dass es mit einer ausreichend geringen Geschwindigkeit bzw. Energie gegen den Anschlag fährt. Das Dämpfungselement kann beim Abbremsen des Bauteils folglich dann nicht die Abbremsenergie im erforderlichen Maße aufnehmen. Dauert dieser Zustand länger an, so kann dies zu einer Beschädigung oder gar zu einer Zerstörung der Handhabungseinheit führen.

Der vorliegenden Erfindung liegt deshalb die Aufgabe zu Grunde, ein zu starkes Aufprallen des Bauteils gegen den Anschlag zu erkennen, um dann gegebenenfalls entsprechende Maßnahmen einleiten zu können.

Diese Aufgabe wird durch ein Verfahren mit dem Gegenstand des Patentanspruchs 1 gelöst. Folglich ist insbesondere vorgesehen, dass der Endlagenschalter ein Prallsignal dann erzeugt, wenn vom Sensor nach einem Erstanschlagen des Bauteils am Anschlag aufgrund eines Abprallens des Bauteils ein Rückbewegen und danach ein Zweitanschlagen des Bauteils am Anschlag detektiert wird.

Beim Auftreffen des Bauteils auf den Anschlag kann es dabei zu einer elastischen Desinformation des Anschlags kommen. Denkbar ist, die elastische Deformation des Anschlags zu überwachen, und dann ein Prallsignal zu erzeugen, wenn die Deformation einen Grenzwert überschreitet. Die Anschlagposition kann dabei aufgrund einer Deformation des Anschlages überfahren werden, was ebenfalls detektiert werden kann.

Das erfindungsgemäße Verfahren hat folglich den Vorteil, dass nicht nur ein Endlagensignal erzeugt wird, wenn das Bauteil am Anschlag detektiert wird, beziehungsweise gegen diesen anschlägt. Unabhängig von diesem Endlagensignal wird gemäß der Erfindung ein zweites Signal, nämlich das Prallsignal dann erzeugt, wenn der Sensor detektiert, dass das Bauteil am Anschlag aufgrund des Rückstoßes abprallt, eine kurze Rückbewegung durchführt und dann erneut gegen den Anschlag fährt. Wird dieses zweite Signal, also das Prallsignal vom Endlagenschalter generiert, so kann ein Abprallen sicher erkannt werden und es können entsprechende Gegenmaßnahmen eingeleitet werden. Beispielsweise kann das Dämpfungselement neu eingestellt oder ausgetauscht werden, bevor es zu einer Beschädigung der Handhabungseinheit kommt.

Das Dämpfungselement kann als Stoßdämpfer, geeignete Ventilsteuerung, als Drosselventil oder dergleichen ausgebildet sein.

Vorteilhafterweise wird ein Prallsignal vom Endlagenschalter nur dann erzeugt, wenn die Zeitdauer zwischen dem Erstanschlagen und dem Zweitanschlagen und/oder die Länge des Rückweges beim Bewegen einen vorgegebenen oder einen vorgebbaren Grenzwert überschreitet oder wenn ein mehrfaches Abprallen des Bauteils detektiert wird. Falls die Zeitdauer als maßgebliche Größe betrachtet wird, handelt es sich bei dem Grenzwert um eine Grenzdauer; falls die Länge des Rückweges betrachtet wird, handelt es sich bei dem Grenzwert um eine Grenzstrecke. Durch Vorsehen des Grenzwertes wird vermieden, dass ein zu geringfügiges Abprallen, welches nicht zu einer Beschädigung der Handhabungseinheit führt, nicht zur Ausgabe des Prallsignals führt. Wird aber ein Grenzwert überschritten, der zu einer Beschädigung der Handhabungseinheit führen kann, wird das Prallsignal erzeugt.

Der Endlagenschalter weist vorzugsweise einen ersten Ausgang und einen zweiten Ausgang auf, wobei dann das Endlagensignal über den ersten Ausgang und das Prallsignal über den zweiten Ausgang ausgegeben wird. Bei Erreichen der Endlage wird folglich immer das Endlagensignal über den ersten Ausgang ausgegeben. Nur dann, wenn ein Abprallen des Bauteils detektiert wird, wird über den zweiten Ausgang das Prallsignal ausgegeben.

Ferner hat sich als vorteilhaft herausgestellt, wenn mit dem Detektieren des Erstanschlagens, also insbesondere bei Erzeugen des Endlagensignals ein Prallerkennungsmodus aktiviert wird, in dem die Schalthysterese des Sensors zur Detektion des Zweitanschlagens reduziert und vorzugsweise minimiert wird. Dadurch kann erreicht werden, dass die Sensitivität des Sensors im Prallerkennungsmodus stark erhöht wird; minimale Bewegungen des Bauteils, die durch die Rückbewegung nach einem Abprallen am Anschlag entstehen, können folglich sicher erkannt werden.

Vorteilhafterweise wird während des Prallerkennungsmodus dann ein Prallsignal erzeugt, wenn vom Sensor aufgrund der Rückbewegung zunächst ein Austrittsignal aus dem Detektionsbereich und daran anschließend ein Eintrittssignal in den Detektionsbereich erzeugt wird. Liegen folglich diese beiden Schaltsignale vor, dann wird das Prallsignal vom Endlagenschalter ausgegeben.

Während dem Prallerkennungsmodus wird der Sensor in vergleichsweise kurzen Zeitintervallen abgefragt, die vorzugsweise im Bereich von 300 bis 1000 Mikrosekunden und weiter vorzugsweise im Bereich von 500 bis 800 Mikrosekunden und weiter vorzugsweise im Bereich von 700 Mikrosekunden liegen. Dadurch kann erreicht werden, dass auch eine vergleichsweise schnelle Abfolge des Abprallens, Rückbewegens und Zweitanschlagens sicher erkannt wird. Ferner ist vorteilhaft, wenn der Prellerkennungsmodus eine vorgebbare oder vorgegebene Zeitdauer aktiviert bleibt. Die Zeitdauer kann insbesondere im Bereich von 30 bis 200 Millisekunden und weiter vorzugsweise im Bereich von 40 bis 100 Millisekunden und weiter vorzugsweise im Bereich von 50 Millisekunden liegen. Nach Ablauf der Zeitdauer wird der Prallerkennungsmodus vorzugsweise automatisch beendet.

Die eingangs genannte Aufgabe wird auch gelöst durch eine Handhabungseinheit mit einem gegen einen Anschlag verfahrbaren Bauteil, mit einem Dämpfungselement zu Dämpfung der Bewegung des Bauteils vor Erreichen des Anschlags und mit einem Endlagenschalter, der einen Sensor umfasst, wobei die Handhabungseinheit ausgebildet und eingerichtet ist zur Durchführung des erfindungsgemäßen Verfahrens. Der Sensor ist dabei als Magnetsensor ausgebildet, und weiter insbesondere als Hallsensor, der den Eintritt eines am verfahrbaren Bauteil befindlichen Magnets in den Detektionsbereich detektiert.

Der Endlagenschalter weist vorzugsweise einen Mikroprozessor zur Auswertung der vom Sensor erzeugten Signale auf, wobei der Mikroprozessor dann das Endlagensignal und das Prallsignal erzeugt und an dem Ausgang oder den jeweiligen Ausgängen ausgibt.

Weitere Einzelheiten und vorteilhafte Ausgestaltungen der Erfindung sind der nachfolgenden Beschreibung zu entnehmen, gemäß derer ein Ausführungsbeispiel der Erfindung näher beschrieben und erläutert ist.

Es zeigen:
- Figur 1: eine schematische Darstellung eines erfindungsgemäßen Handhabungseinheit und
- Figur 2: eine schematische Darstellung des vom Bauteil zurückgelegten Weges über der Zeit sowie Schaltpunkten.

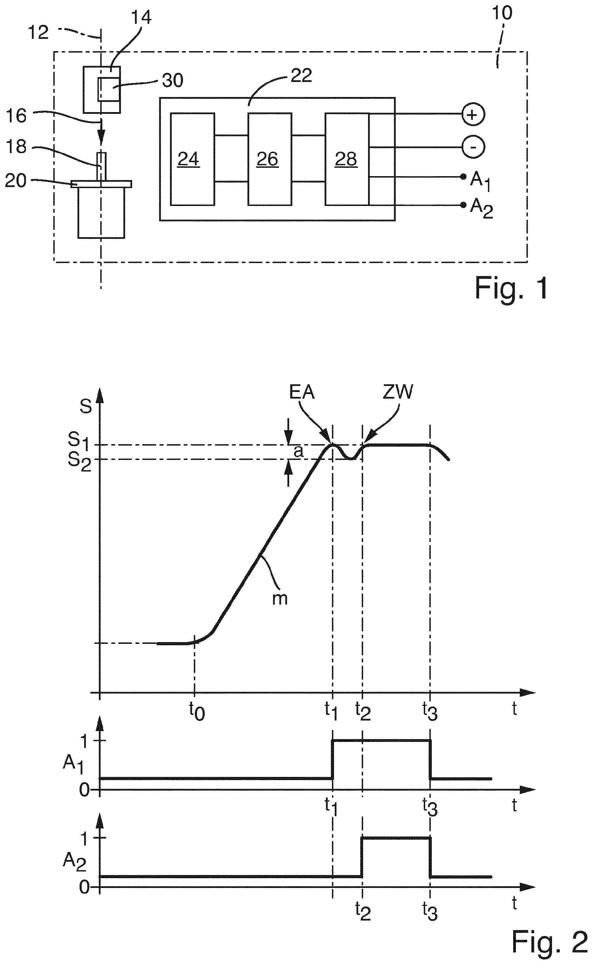

In der Figur 1 ist eine Handhabungseinheit 10 schematisch dargestellt, die ein entlang einer Achse 12 verfahrbares Bauteil 14 aufweist, das im Betrieb in Richtung des Pfeils 16 gegen ein Dämpfungselement 18 bewegt wird.

Das Bauteil 14 kann beispielsweise als Schlitten, Schwenkteller, Antriebskolben, Zahnstange oder als sonst ein beweglich ausgebildetes Bauteil einer entsprechenden Handhabungseinheit 10 ausgebildet sein.

In einer Endlage stößt das Bauteil 14 gegen einen Anschlag 20. Zur Detektion des Bauteils 14 in der Endlage, also wenn es am Anschlag 20 anliegt, ist ein Endlagenschalter 22 vorgesehen, der einen Magnetsensor 24, einen Verstärker 26 und einen Mikroprozessor 28 umfasst. Damit das Bauteil 14 vom Magnetsensor 24 sicher erkannt wird, ist am Bauteil 14 ein Permanentmagnet 30 angeordnet. Der Endlagenschalter 22 weist zwei Ausgänge A₁ und A₂ auf.

Im Betrieb detektiert der Magnetsensor 24 das Bauteil 14, wenn dieses den Anschlag 20, also die Endlage erreicht hat.

In der Figur 2 ist dazu die Bewegung m des Bauteils 14 entlang des Weges s über der Zeit t aufgetragen. Zum Zeitpunkt t₀ wird das Bauteil 14 beschleunigt und bewegt sich mit einer vergleichsweise konstanten Geschwindigkeit, bis es kurz vor Erreichen des Weges s₁ vom Dämpfungselement 18 abgebremst wird. Zum Zeitpunkt t₁ schlägt das Bauteil 14 gegen den Anschlag 20 (Erstanschlag EA); zu diesem Zeitpunkt t₁ hat es den Weg s₁ zurückgelegt. Das Bauteil 14 befindet sich mit Anschlagen am Anschlag 20 im Detektionsbereich des Magnetsensors 24, weshalb der Endlagenschalter 20 den Ausgang A₁ von 0 auf 1 setzt.

Dämpft das Dämpfungselement 18 die Bewegung des Bauteils 14 vor Erreichen des Anschlags 20 nicht ausreichend ab, so kommt es - wie in Figur 2 gezeigt - zu einem Abprallen des Bauteils 14 am Anschlag 20, wodurch das Bauteil 20 nach dem Zeitpunkt t₁ um einen Rückweg a zurückbewegt wird, der sich aus s₁-s₂ ergibt. Danach schlägt das Bauteil 14 im Zeitpunkt t₂ erneut (Zweitanschlagen ZW) gegen den Anschlag 20.

Nach dem Zweitanschlagen ZA kommt dann das Bauteil 14 am Anschlag 20, also nach zurückgelegtem Weg a, zum Anliegen.

Mit Erreichen des Erstanschlagens EA schaltet der Endlagenschalter 22 in einen Prallerkennungsmodus, in dem die Schalthysterese des Magnetsensors 24 minimiert wird. Dadurch können sehr kleine Bewegungen des Bauteils 14 detektiert werden. Zudem wird im Prallerkennungsmodus der Magnetsensor 24 in sehr kleinen Zeitintervallen abgefragt, die vorzugsweise im Bereich von 700 Mikrosekunden liegen.

Wird nun im Prallerkennungsmodus ein Rückweg a detektiert, der über einem Grenzwert liegt, so wird vom Magnetsensor 24 ein Austritt des Bauteils 14 aus dem Detektionsbereich erkannt und daran anschließend ein Wiedereintritt, wenn, oder kurz bevor das Bauteil 14 gegen den Anschlag zum zweiten Mal anschlägt (ZW). Werden diese beiden Signale, das Austrittssignal und das Eintrittssignal detektiert, dann wird vom Endlagenschalter 22 ein ungewolltes Abprallen erkannt, weshalb der Ausgang A₂ von 0 auf 1 gesetzt wird, und damit das Prallsignal ausgegeben wird.

Liegt die Rückbewegung a des Bauteils 14 unterhalb eines Grenzwertes, so wird letztlich kein Prallsignal am Ausgang A₂ generiert wird. Je nach den mechanischen Eigenschaften der Handhabungseinheit 10, des Dämpfungselements 18, des Bauteils 14 und des Anschlags 20 kann ein Abprallen in einem gewissen Rahmen als zulässig angesehen werden.

Zum Zeitpunkt t₃ verlässt das Bauteil 14 den Endanschlag 20 und bewegt sich folglich entgegen der Richtung des Pfeils 16 aus dem Detektionsbereich.

Mit der Erfindung kann folglich ohne Vorsehen von zusätzlichen Bauteilen auf sichere und einfache Art und Weise ein unerwünschtes Abprallen des Bauteils 14 an einem Endanschlag 20 detektiert werden. Damit kann einer Beschädigung oder Zerstörung der Handhabungseinheit vorgebeugt werden.

## Patentansprüche

1. Verfahren zur Bestimmung des Abprallens eines verfahrbaren Bauteils (14) an einem Anschlag (20) einer Handhabungseinheit (10), wobei die Handhabungseinheit (10) ein Dämpfungselement (18) zur Dämpfung der Bewegung des Bauteils (14) vor Erreichen des Anschlags (20) und einen Endlagenschalter (22) mit einem Magnetsensor (24) aufweist, wobei der Endlagenschalter (22) ein Endlagensignal (A1=1) erzeugt, wenn vom Sensor (24) das Bauteil (14) am Anschlag (20) detektiert wird, wobei der Endlagenschalter (22) dann ein Prallsignal (A2=1) erzeugt, wenn vom Sensor (24) nach einem Erstanschlagen (EA) des Bauteils (14) am Anschlag (20) aufgrund eines Abprallens des Bauteils (14) ein Rückbewegen (a) und danach ein Zweitanschlagen (ZA) des Bauteils (14) am Anschlag (20) detektiert wird.

2. Verfahren nach Anspruch 1, **dadurch gekennzeichnet, dass** ein Prallsignal (A2=1) nur dann erzeugt wird, wenn die Zeitdauer (t₂-t₁) zwischen dem Erstanschlagen (EA) und dem Zweitanschlagen (ZA) und/oder die Länge (a=S₁-S₂) des Rückwegs beim Rückbewegen einen vorgegebenen oder vorgebbaren Grenzwert überschreitet.

3. Verfahren nach Anspruch 1 oder 2, **dadurch gekennzeichnet, dass** der Endlagenschalter (22) einen ersten Ausgang (A1) und einen zweiten Ausgang (A2) aufweist, und dass das Endlagensignal über den ersten Ausgang und das Prallsignal über den zweiten Ausgang ausgeben wird.

4. Verfahren nach Anspruch 1, 2 oder 3, **dadurch gekennzeichnet, dass** mit dem Detektieren des Erstanschlagens (EA) ein Prallerkennungsmodus aktiviert wird, in dem die Schalthysterese des Sensors (24) zur Detektion des Zweitanschlagens (ZA) reduziert und vorzugsweise minimiert wird.

5. Verfahren nach Anspruch 4, **dadurch gekennzeichnet, dass** während des Prallerkennungsmodus dann ein Prallsignal erzeugt wird, wenn vom Sensor (24) aufgrund der Rückbewegung (a) ein Austrittssignal aus dem Detektionsbereich und daran anschließend ein Eintrittssignal in den Detektionsbereich erzeugt wird.

6. Verfahren nach Anspruch 5, **dadurch gekennzeichnet, dass** während dem Prallerkennungsmodus der Sensor (24) in kurzen Zeitintervallen abgefragt wird, die vorzugsweise im Bereich von 300-1000 Mikrosekunden weiter vorzugsweise im Bereich von 500-800 Mikrosekunden und weiter vorzugsweise im Bereich von 700 Mikrosekunden liegen.

7. Verfahren nach Anspruch 4, 5 oder 6, **dadurch gekennzeichnet, dass** der Prallerkennungsmodus eine vorgebbare oder vorgegebene Zeitdauer aktiviert bleibt.

8. Handhabungseinheit (10) mit einem gegen einen Anschlag (20) verfahrbaren Bauteil (14), mit einem Dämpfungselement (18) zur Dämpfung der Bewegung des Bauteils (14) vor Erreichen des Anschlags (20) und mit einem einen Magnetsensor (24) umfassenden Endlagenschalter (22), der derart ausgebildet und eingerichtet ist, dass er das Verfahren nach einem der vorhergehenden Ansprüche durchführt.

9. Handhabungseinheit (10) nach Anspruch 8, **dadurch gekennzeichnet, dass** der Endlagenschalter (22) einen Mikroprozessor (28) zur Auswertung der vom Sensor (24) erzeugten Signale und zur Erzeugung des Endlagensignal und des Prallsignal aufweist.

## Claims

1. Method for determining the rebound of a movable component (14) on a limit stop (20) of a handling unit (10), wherein the handling unit (10) comprises a damping element (18) for damping the movement of the component (14) before reaching the limit stop (20) as well as a limit stop switch (22) with a magnetic sensor (24), wherein the limit stop switch (22) generates a limit stop signal (A1=1) when the component (14) is detected at the limit stop (20) by the sensor (24), wherein the limit stop switch (22) generates a rebound signal (A2=1), if the sensor (24) after a first impact (EA) of the component (14) on the limit stop (20) detects a reverse movement (a) of the component (14) due to a rebound of the component (14) and after that a second impact (ZA) of the component (14) on the limit stop (20).

2. Method as claimed in claim 1, **characterized in that** a rebound signal (A2=1) is generated only when the time period (t₂-t₁) between the first impact (EA) and the second impact (ZA) and/or the length (a=S₁-S₂) of the reverse way during reverse movement exceeds a predetermined or predeterminable limit.

3. Method as claimed in claim 1 or 2, **characterized in that** the limit stop switch (22) comprises a first output (A1) and a second output (A2) and that the limit stop signal is output through the first output and the rebound signal through the second output.

4. Method as claimed in claim 1, 2 or 3, **characterized in that** upon detecting the first impact (EA) a rebound detecting mode is activated in which the switching hysteresis of the sensor (24) for detecting the second impact (ZA) is reduced and preferably minimized.

5. Method as claimed in claim 4, **characterized in that** during the rebound detecting mode a rebound signal is generated when, due to the reverse movement (a), the sensor (24) generates an exit signal from the detecting region and subsequently an entering signal into the detecting region.

6. Method as claimed in claim 5, **characterized in that** during the rebound detecting mode the sensor (24) is sampled in short time periods lying preferably in the region of 300 to 1000 µs, further preferred in the region of 500 to 800 µs and still further preferred in the region of 700 µs.

7. Method as claimed in claim 4, 5 or 6, **characterized in that** the rebound detecting mode remains activated for a predeterminable or predetermined period of time.

8. Handling unit (10) having a component (14) which can be moved against a limit stop (20), having a damping element (18) for damping the movement of the component (14) before reaching the limit stop (20) and having a limit stop switch (22) comprising a magnetic sensor (24) which is configured and arranged in such a way that it performs the method as claimed in one of the preceding claims.

9. Handling unit (10) as claimed in claim 8, **characterized in that** the limit stop switch (22) comprises a microprocessor (28) for utilizing the signals generated by the sensor (24) and for generating the limit stop signal and the rebound signal.

## Revendications

1. Procédé pour la détermination du rebondissement d'une pièce (14) déplaçable contre une butée (20) d'une unité de manipulation (10), dans lequel l'unité de manipulation (10) présente un élément d'amortissement (18) pour l'amortissement du mouvement de la pièce (14) avant l'atteinte de la butée (20) et un commutateur de fin de course (22) avec un capteur magnétique (24), dans lequel le commutateur de fin de course (22) produit un signal de fin de course (A1=1), lorsque la pièce (14) sur la butée (20) est détectée par le capteur (24), dans lequel le commutateur de fin de course (22) produit alors un signal d'impact (A2=1), lorsqu'un mouvement de retour (a) après un premier choc (EA) de la pièce (14) contre la butée (20) en raison d'un rebondissement de la pièce (14) et ensuite un deuxième choc (ZA) de la pièce (14) contre la butée (20) est détecté par le capteur (24).

2. Procédé selon la revendication 1, **caractérisé en ce qu'**un signal de rebondissement (A2=1) n'est produit que lorsque la durée (t₂-t₁) entre le premier choc (EA) et le deuxième choc (ZA) et/ou la longueur (a=S₁-S₂) du retour lors du mouvement de retour dépasse une valeur limite prédéfinie ou pouvant être prédéfinie.

3. Procédé selon la revendication 1 ou 2, **caractérisé en ce que** le commutateur de fin de course (22) présente une première sortie (A1) et une deuxième sortie (A2), et que le signal de fin de course est émis par l'intermédiaire de la première sortie et le signal de rebondissement par l'intermédiaire de la deuxième sortie.

4. Procédé selon la revendication 1, 2 ou 3, **caractérisé en ce qu'**avec la détection du premier choc (EA) un mode d'identification de rebondissement est activé, dans lequel l'hystérèse de commutation du capteur (24) pour la détection du deuxième choc (ZA) est réduite et de préférence réduite au minimum.

5. Procédé selon la revendication 4, **caractérisé en ce que** pendant le mode d'identification de rebondissement un signal de rebondissement est alors produit, lorsqu'un signal de sortie provenant de la zone de détection est produit par le capteur (24) en raison du mouvement de retour (a) et que suite à cela un signal d'entrée est produit dans la zone de détection.

6. Procédé selon la revendication 5, **caractérisé en ce que** pendant le mode d'identification de rebondissement le capteur (24) est interrogé par courts intervalles de temps, qui se situent de préférence dans la plage de 300-1000 microsecondes plus préférablement dans la plage de 500-800 microsecondes et plus préférablement dans la plage de 700 microsecondes.

7. Procédé selon la revendication 4, 5 ou 6, **caractérisé en ce que** le mode d'identification de rebondissement reste activé pendant une durée pouvant être prédéfinie ou prédéfinie.

8. Unité de manipulation (10) avec une pièce (14) déplaçable contre une butée (20), avec un élément d'amortissement (18) pour l'amortissement du mouvement de la pièce (14) avant l'atteinte de la butée (20) et avec un commutateur de fin de course (22) comprenant un capteur magnétique (24), qui est réalisé et conçu de telle sorte qu'il met en œuvre le procédé selon l'une quelconque des revendications précédentes.

9. Unité de manipulation (10) selon la revendication 8, **caractérisée en ce que** le commutateur de fin de course (22) présente un microprocesseur (28) pour l'évaluation des signaux produits par le capteur (24) et pour la production du signal de fin de course et du signal de rebondissement.
